# EUROPEAN PATENT SPECIFICATION

(11) **EP 0 952 379 B1**
(45) Date of publication and mention of the grant of the patent: **11.02.2004**
(21) Application number: 98120946.3
(22) Date of filing: 04.11.1998
(51) Int. Cl.: F16L 27/12, F16L 57/00, F16L 51/00

(54) **Fitting for the reinforcement of a pipe connection**
Fitting zur Verstärkung einer Rohrverbindung
Dispositif pour le renforcement d un raccord de tuyaux

(30) Priority: 24.04.1998 JP 11533598
(43) Date of publication of application: 27.10.1999
(73) Proprietor: Waterworks Technology Development Organization Co., Ltd., Osaka (JP)
(72) Inventor: Takemura, Yukio WATERWORKS TECH.DEVEL.ORG.CO.,LTD., 1-ban, Osaka (JP); Saito, Kikuo WATERWORKS TECH.DEVEL.ORG.CO.,LTD., 1-ban, Osaka (JP); Morikawa, Kohtaro WATERWORKS TECH.DEV.ORG.CO.,LTD., 1-ban, Osaka (JP); Kamata, Seiichi, Kadoma-shi Osaka (JP)
(74) Representative: Sajda, Wolf E., Dipl.-Phys.

(56) References cited:
- FR-A- 2 659 719
- GB-A- 806 481
- PATENT ABSTRACTS OF JAPAN vol. 097, no. 004, 30 April 1997 (1997-04-30) & JP 08 338576 A (KUBOTA CORP), 24 December 1996 (1996-12-24)

## Description

### BACKGROUND OF THE INVENTION

### Field of the Invention

The present invention relates to a reinforcement fitting, and more specifically, to a reinforcement fitting to be installed to connections of existing pipes such as underground water pipes for increasing their earthquake resistance.

### Description of the Related Art

The longitudinal end portion of, for example, underground water pipes has a joint structure for connecting pipes, and via this joint structure, a plurality of pipes are connected one after another. Of the existing pipes set up throughout the country, part has a joint structure equipped with an aseismic mechanism which can shrink and expand with pipe end portions allowing to maintain water-tightness, but the joint structure equipped with an aseismic mechanism is not formed on connections of all pipes. Rather, the joint structure equipped with an aseismic mechanism is mainly only used nowadays.

In the case of a joint structure not equipped with an aseismic mechanism, either one of the pipes comes off from the joint portion when large crustal movements such as earthquakes, etc. occur, and therefore accidents such as water leakage, etc. are to be expected. In countries where earthquakes are likely to occur, it is desirable to provide all the connections of underground pipes with a pipe joint structure equipped with an aseismic mechanism. In actuality, part has already been replaced with joints equipped with an aseismic mechanism.

However, a conventional joint structure equipped with an aseismic mechanism has a complicated construction and is expensive, and it is not always easy to install. In the case of cast iron pipes buried in the ground over a long period of time, connection members such as bolts, nuts, etc. composing the joint structure are rusted, and the removal work of these, when considered, is not at all easy. Consequently, it is technically and economically difficult and not realistic to replace all the connections of the existing pipes with the joint structure equipped with the aseismic mechanism in a short time.

Therefore, development of reinforcement fittings has been strongly desired in order to provide an aseismic mechanism to the connections of existing pipes not equipped with aseismic mechanisms at high efficiency and at low cost. An example of a prior art fitting is shown in JP-A-8338576. Accordingly, the object underlying the present invention is to provide reinforcement fittings for existing connections between pipes, which reinforcement fittings can be mounted with high efficiency and at low cost to the connections of existing pipes.

### SUMMARY OF THE INVENTION

The object underlying the invention is solved by means of a reinforcement fitting comprising the features of the main claim. Further developments of the invention have been specified in the subclaims.

According to the invention, the reinforcement fitting comprises an externally fitted portion which can provide shrinkage-expansion capabilities wherein the sealability is maintained at connections between existing pipes. This is achieved by installing the reinforcement fitting to the connections of the existing pipes, wherein the reinforcement fitting has an inside diameter that can be externally fitted to the existing pipe. By providing a cut-out portion in the reinforcement fitting it is possible for it to be placed as close as possible to the connection between existing pipes, A contact member is provided which is internally fitted into a recessed portion formed on the inside of the externally fitted portion and which comprises both a tapered contact surface and a further contact portion adapted to come in contact with one of the existing pipes in the circumferential direction. The contact member increases the contact resistance with one of the existing pipes when external forces are exerted in a direction tending to separate the existing pipes. Also, an engagement portion is provided which is capable of engagement with the other existing pipe when the external force is exerted in a direction tending to separate the existing pipes.

Because the reinforcement fitting is configured in such a manner, the reinforcement fitting according to the invention is externally fitted over the whole connections so that it covers from the outside without removing the connections of the existing pipes and with the connections of the existing pipes held completely intact; thus, the reinforcement fittings can be extremely easily installed.

In addition, when external forces are exerted in a direction tending to separate the existing pipes due to crustal movements such as earthquakes, the aseismic mechanism can be effectively applied by the action of the contact member which increases the contact resistance, wherein the engagement portion and the existing pipes are allowed to be engaged for the first time when the external force is exerted in a direction tending to separate the existing pipes; hence, it can exhibit and perform the function of permitting shrinkage and expansion movements of the existing pipes. In addition, the cost can be held at a low level due to a simpler construction when compared to that of a conventional aseismic joint equipped with a shrinkage-expansion mechanism.

As a result, according to the present invention, it is possible to provide a reinforcement fitting that is capable of applying the aseismic mechanism to the connections of existing pipes in high efficiency and at low cost.

The contact portion of the contact member forms an arc along the peripheral surface of the exiting pipe and at the same time it has a nearly V-shaped cross-section, wherein a plurality of contact members may be placed into corresponding recessed portions.

With such a configuration, if the reinforcement fitting is installed by externally fitting over an existing pipe, the contact portion of the contact member is able to be brought in line contact with the peripheral surface of the existing pipe; this is very desirable because the resistance to the travel direction of the existing pipes can be increased.

In addition, because the cross-section of the contact portion of the contact member has nearly a V-shaped form, the contact portion is allowed to cut into the peripheral surface of the existing pipe when the reinforcement fitting is installed.

This feature is preferable because the resistance to the travel direction of the existing pipes can be increased; in addition, since a plurality of contact portions is provided, the resistance against the travel of the existing pipe can be distributed. This is a desirable effect because the durability of the contact portion proper can be held at a high level.

Moreover, it is preferable that the contact portion of the contact member is adapted to come in contact with at least 30 % or more of the peripheral length of the existing pipe.

With such a configuration, the resistance to the travel action of the existing pipe can be constantly maintained at a high level. If the length in contact with the existing pipe is less than 30 % of the peripheral length of the existing pipe, then the contact resistance to the pipe due to earthquakes and the like, which may exert large external forces, is small and therefore not desirable. It is even more preferable that the contact portion of the contact member is adapted to come in contact with 80 % or more of the peripheral length of the existing pipe.

Furthermore, when the reinforcement fitting is installed to connections of existing pipes, it is preferable that the tip end of the engagement portion be formed with such a length that it can reach the vicinity of the tip end of the other existing pipe in terms of axial length of the existing pipe.

With such a configuration, the flexibility allowance corresponding to the possible travel distance of the existing pipe against external forces tending to separate the existing pipes can be maximized as far as possible while maintaining the water tightness.

Further objects, features and advantages of the invention will be explained below with reference to preferred embodiments of the invention and the accompanying drawings.

### BRIEF DESCRIPTION OF THE DRAWINGS

- FIG. 1(a) and 1(b): are cross-sectional views showing the installation condition of the reinforcement fitting of a first embodiment according to the invention, namely in an original installation condition and in a condition when external forces have been exerted, respectively; the cross-sectional view in FIG. 1 is taken along the line I-I of FIG. 2.
- FIG. 2: is a side view of the reinforcement fitting according to FIG. 1.
- FIG. 3: is a side view of a claw member used in the embodiment according to FIG. 1.
- FIG. 4: is a cross-sectional view of the claw member in FIG. 3 taken along the line IV-IV in FIG. 3.

### DETAILED DESCRIPTION OF PREFERRED EMBODIMENTS

With reference to the various figures in the drawings, preferred embodiments according to the invention will be described in detail hereinafter.

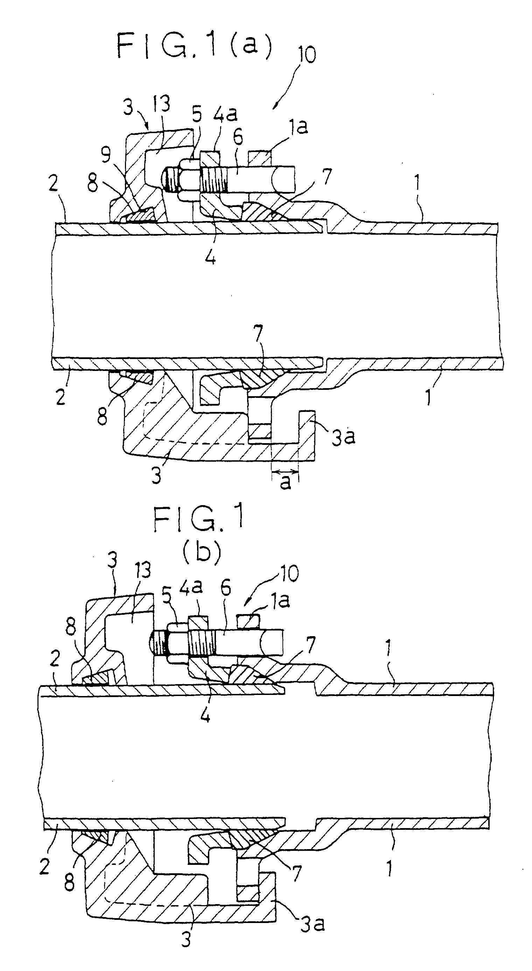

FIG. 1 shows a connection 10 of end portions of existing pipes 1 and 2, for example cast iron pipes, such as underground water pipes etc.; in particular, FIG. 1 shows the condition in which a reinforcement fitting 3 according to the present invention has been installed to such a connection 10. The pipe 1 has an end portion with a large-diameter socket construction, and the pipe 2 has an end portion which is inserted into the socket construction of the end portion of the other pipe 1.

These existing pipes 1 and 2 are connected to each other and fixed by means of a retaining ring 4 which is externally fitted over the existing pipe 2 wherein water-tightness is maintained between them. Namely, a flange portion 4a of the retainer ring 4 and a flange portion 1a of the existing pipe 1 are connected and fixed to each other by means of bolts 6 and nuts 5 wherein air-tightness is achieved by using an intermediate rubber ring 7 which is a sealing member.

Such an end portion connecting construction of existing pipes 1 and 2 is a construction that can stand water pressure, but depends only on the strength of each component member when earthquakes and the like occur; in other words, it has no special aseismic structure and it also has a small shrinkage and expansion rate with respect to any crustal movements.

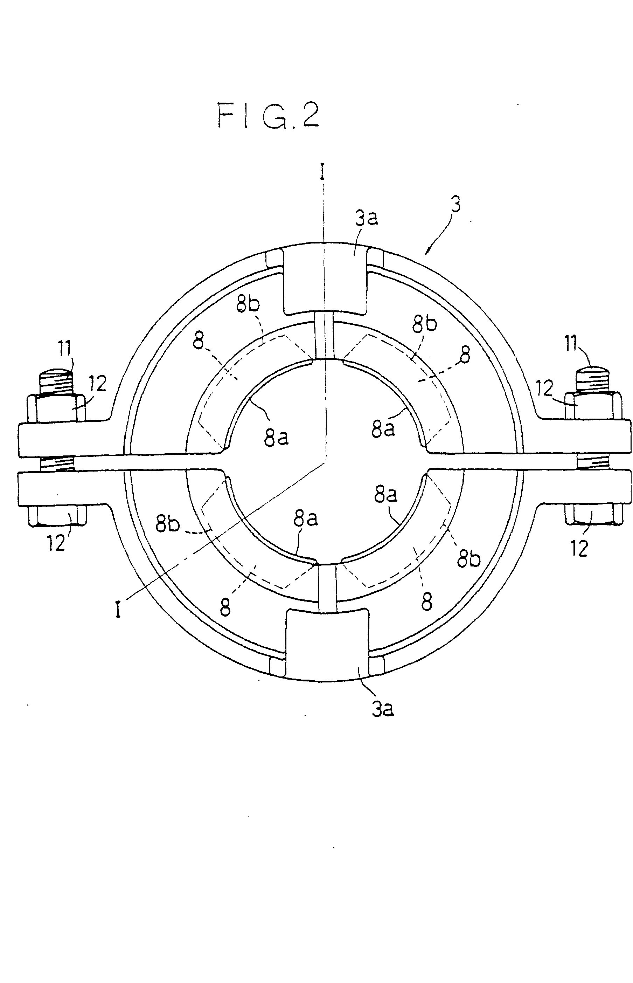

By installing the reinforcement fitting 3 to such a connection portion 10, the existing pipes 1 and 2 can be prevented from exceeding a shrinkage and expansion rate which the existing pipes 1 and 2 have; hence, they can be prevented from separating from each other, and they can be provided with excellent aseismic capabilities. The configuration of the reinforcement fitting 3 is shown in FIG. 2 of the drawings.

Accordingly, the reinforcement fitting 3 is of a two-split construction equipped with an inside diameter than can be externally fitted over the existing pipes 1 and 2. By externally fitting the reinforcement fitting 3 over the peripheral surfaces in the vicinity of the connection 10 of the existing pipes 1 and 2 and then combining the split construction by means of bolts 11 and nuts 12, the reinforcement fitting 3 is able to be installed on and fixed to portions of the flange portions of the right and left end portions of the existing pipes 1 and 2, as seen from the side in FIG. 1.

This installation and fixation is achieved by passing the bolts 11 through corresponding through holes (not illustrated) formed on the flange portion and then tightening the bolts 11 by means of the nuts 12. Another combination of bolts 11 and nuts 12 for the two portions of the right and left end portions shown in FIG. 2 is provided in the perpendicular direction of the paper surface of FIG. 2, and the tightening force for the existing pipes 1 and 2 may be reinforced. The number of these fixing jigs may be changed as required in accordance with the applications, sizes. etc..

As diagrammatically shown in FIG. 2 of the drawings, four claw members 8, forming arcuate contact members extending in the circumferential direction of the existing pipes 1 and 2, are placed around the pipes 1 and 2 so that they come in nearly equal contact with the peripheral surface of the corresponding existing pipes 2, respectively, on the inner portions thereof; these claw members or arcuate contact members are externally fitted portions of the reinforcement fitting 3 for externally fitting over the existing pipes. When the reinforcement fitting 3 has been installed to the peripheral surface of the existing pipes 1 and 2, and when it has been tightened and fixed by means of the bolts 11 and the nuts 12, the tip ends 8a of the four claw members 8 come in contact with the peripheral surface of the existing pipes 1 and 2 wherein the tip ends 8a of the four claw members 8 slightly cut into the peripheral surface thereof.

These claw members 8 are provided with the tip ends 8a, provided as contact portions to be brought in contact with the existing pipe and formed with a sharpened edge; at the same time, the top surfaces 8b of the claw members 8 are tapered with respect to the axial direction of the existing pipes; accordingly, the cut-in of the claw members 8 into the existing pipes 2 with respect to a possible separation movement of both existing pipes 1 and 2 is intended to be increased by a so-called wedge effect.

These claw members 8 are installed in parallel in the circumferential direction, wherein two such claw members are provided in the embodiment of FIG. 2 for the split reinforcement fitting portions, respectively, and it is intended that they come in contact with nearly 80 % or more of the peripheral length in the circumferential direction of the existing pipes. By increasing the contact length in this way, it is possible to increase the cut-in length of the tip end edge portion associated not only with the initial travel of the existing pipe but also with the progress of such a travel; accordingly, the resistance against such a separation travel of the existing pipes 1 and 2 can be made extremely large, and this feature is preferable because the effects of suppressing such a separation travel can be made conspicuous.

It should be noted, when the contact of the claw members 8 with the existing pipe 2 is less than 30 % of the peripheral length of the existing pipe 2, then it is not possible to increase the contact resistance, and therefore it is not desirable to have such low values which should be preferably 30 % or higher, in particular 80 % or more. It is also possible to further increase the number of claw members 8 and to shorten the circumferential length of each of the individual claw members 8 for reasons of obtaining a uniform distribution of corresponding operating forces.

As shown in FIG. 2 of the drawings, the reinforcement fitting 3 is externally fitted over one of the existing pipes 2. In so doing, engagement portions 3a having a nearly L-shaped form and formed at the center portion of each reinforcement fitting 3 with a semi-circular cross-section forming a two-split structure are arranged at positions to form a hitch on the flange portion la of the other existing pipe.

Hence, when external forces tending to separate one of the existing pipes 2 from the other existing pipe 1, a flexibility allowance a is generated between the inner surface of the corresponding engagement portion 3a and the flange portion la of the other existing pipe 1 as shown in FIG.1(a).

In such a situation, it is preferable that the head end of the engagement portion 3a is formed to reach the vicinity of the head end of the one existing pipe 2 because then a large flexibility allowance a can be provided. It should be clear from the drawings that FIG. 1 shows the condition in which the reinforcement fitting 3 is externally fitted over the existing pipes 1 and 2, wherein the reinforcement fitting 3 in FIG. 1 shows a cross-sectional structure taken along the line I-I in FIG. 2.

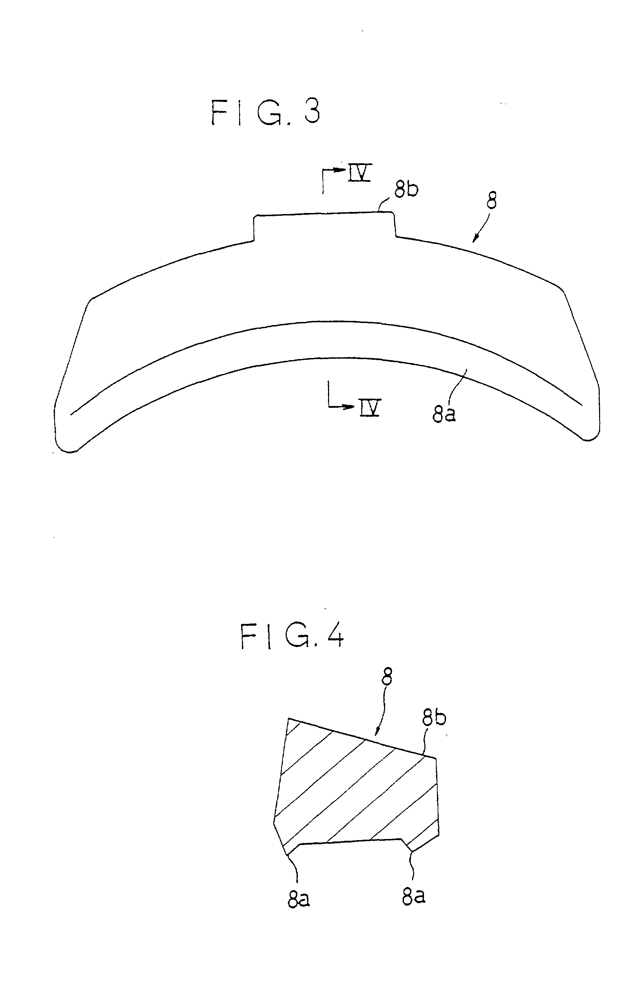

Inside of the contact portion of the reinforcement fitting 3 in contact with the peripheral surface of the one existing pipe 2, a recessed portion 9 is formed into which the corresponding claw members 8 are internally movably fitted, wherein the construction of the claw members 8 is shown in detail in FIGs. 3 and 4 of the drawings.

The inside top of this recessed portion 9 and the top surface 8b of the claw member 8 are parallel to each other, but they are tapered into the axial direction of the existing pipes 1 and 2. The taper of the inside top of the recessed portion 9, as shown in FIG. 1, has a recessed portion space which is narrowed in the direction in which the existing pipe 2 moves when it tends to separate from the other existing pipe 2. When an external force is exerted in the direction tending to separate the existing pipes 1 and 2, a wedge effect is generated between the claw member 8 following the move of the existing pipe 2 and the inside top of the recessed portion 9 of the reinforcement fitting 3, and the inside top of the recessed portion 9 presses against the top surface 8b of the claw member 8.

By this pressing operation, the sharpened head end of the claw member 8 cuts even more into the peripheral surface of the existing pipe 2. As described above, the more external force is exerted in the direction tending to separate the existing pipes 1 and 2, the greater effects are achieved for suppressing the separating action of both existing pipes.

In addition, on the peripheral side of the reinforcement fitting 3, a cut-out portion 13 is formed for spatially evading any contact with the protruding portion of fixing jigs such as a combination of bolts 6 and nuts 5 formed on the connections between existing pipes 1 and 2. Therefore, the reinforcement fittings 3 can be installed as close as possible to the connections between such existing pipes 1 and 2. The cut-out portion 13 must not be a recessed portion as shown in FIG. 1 of the drawings, but may also be formed by a simple space provided that it can evade any undesired contact with connections of the existing pipes 1 and 2.

The configuration and effect of the claw member 8 will now be described in more detail. As shown in FIG. 4 of the drawings which discloses an enlarged cross-sectional view, the claw member 8 has linear protrusions 8a of a nearly V-shaped form in cross-section which are extended and expanded along the peripheral surface of the existing pipe 2 at two places away from each other in the axial direction of the existing pipes 1 and 2.

The protrusion 8a having_the nearly V-shaped form comes in contact with the peripheral surface of the existing pipe 2, and if any condition occurs in which the existing pipe 2 moves in a direction so that the existing pipe 2 is separated from the other existing pipe 1, then the V-shaped protrusion 8a deeply cuts into the peripheral surface of the existing pipe 2 and a large contact resistance is generated at the contact portion between the respective protrusions 8a and the peripheral surface of the existing pipe 2.

That is, when external forces are exerted in a direction tending to separate the existing pipes 1 and 2, as shown in FIG. 1(b), the protrusion 8a of the claw member 8 moves only by the flexibility allowance a and temporarily stops with the protrusion 8a of the claw member 8 cut into the peripheral surface of the existing pipe 2. However, when a further greater external force is exerted, then the protrusion 8a of the claw member 8 cuts into the peripheral surface of the existing pipe 2 because of the wedge effects of the contact surfaces of the inside top portion of the recessed portion 9 and the top surface 8b of the claw member 8; hence, the separating action of the existing pipe 2 is strongly suppressed. During this period, the pipes 1 and 2 are maintained in a water-tight connection by means of the rubber ring 7 and water and the like does not leak out from the interior of the. pipes 1 and 2; also it goes without saying that no foreign matter can mix into the pipe from the pipe outside thereof.

When a reinforcement fitting of this embodiment has a configuration as described above, the construction thereof is simpler than a joint which is equipped with a conventional aseismic mechanism; therefore, the costs are relatively inexpensive, and the reinforcement fitting can easily be installed to connections between existing pipes which are practically equipped with no aseismic structure.

In addition, various advantages are achieved as explained below: no large load is applied to the connections between the existing pipes; a flexibility allowance is provided for with respect to elongation and expansion of the existing pipes. Moreover, the aseismic function does not depend on the strength of the connections proper of the existing pipes. Hence, damage or destruction of existing pipes against crustal movements of any kind can effectively be avoided.

### Further Embodiments

(a) In the case of the embodiment described above, the reinforcement fitting 3 has a two-split structure, and after externally fitting the reinforcement fitting 3 over the existing pipes 1 and 2, the two flange portions at right and left as seen from the side in FIG. 2 are fixed by a combination of bolts 11 and nuts 12. However, the one end portion may also be of a hinge structure to be connected from the very beginning, and after externally fitting the reinforcement fitting over the existing pipes 1 and 2, the other end portion may be fixed using a fixing jig such as a combination of bolts and nuts.
(b) In the case of the first embodiment described above, an example is described wherein a bolt is inserted through a hole formed at the flange portion and is tightened by means of a nut for fixation purposes. This is one embodiment of a combination of bolts and nuts in this context. However, the bolt may also be rotatably installed to one of the flange portions, and a groove may be formed at the other flange so that the bolt is able to be inserted. When a two-split type reinforcement fitting portion is externally fitted over the existing pipes and fixed, then the bolt may be rotated to fit into the groove, and thereafter the two-split type reinforcement fitting portion may be tightened with a nut for fixation purposes.
(c) Instead of using a reinforcement fitting of a two-split structure as shown in FIG. 2 of the drawings, it is of course also possible to use an embodiment having a three-split structure or a four-split structure, if so desired.
(d) Of course, the number of protrusions 8a on the claw members or contact members 8 may be varied as required, and when the number thereof is increased, the protrusions act to further increase the contact resistance with the corresponding peripheral surface of the existing pipe 2. In addition, the profile of the tip end and the number of protrusions of the claw members 8 may be varied in various forms in order to increase the contact resistance with the existing pipes 2 in order to prevent any separation of the existing pipes 1 and 2 when they move due to the action of applied forces.

## Claims

1. A reinforcement fitting (3) that is adapted to provide shrinkage and expansion capabilities with sealability maintained at the connections (10) between existing pipes (1, 2) by installing the reinforcement fitting (3) to the connections (10) between the existing pipes (1, 2), the fitting comprising
- an externally fitting portion (3) with an inside diameter that can be externally fitted over the existing pipes (1, 2),
- a contact member (8) which is internally fitted into a recessed portion (9) formed on the inside of the externally fitting portion and which comprises both a tapered contact surface (8b) and a contact portion (8a) adapted to come in contact with one (2) of the existing pipes (1, 2) in the circumferential direction, and increases the contact resistance with the one (2) of the existing pipes (1, 2) when an external force is exerted in a direction tending to separate the existing pipes (1, 2), and
- an engagement portion (3a) which is capable of engagement with the other existing pipe (1) when the external force is exerted in a direction tending to separate the existing pipes (1, 2),
**characterized in that** a cut-out portion (13) is formed in the peripheral side of the reinforcement fitting (3) and is adapted to spatially evade a contact of the protruding portion of the reinforcement fitting (3) with the connecting elements (4a, 5, 6) at the connections (10) between existing pipes (1, 2).

2. The fitting according to claim 1,
**characterized in that** the contact portion (8a) of the contact member (8) has an arcuate structure along the peripheral surface of the existing pipes (1, 2) and also has a nearly V-shaped cross-section,
and **in that** a plurality of the contact members (8) are arranged at the recessed portion (9).

3. The fitting according to claim 1 or 2,
**characterized in that** the contact portion (8a) of the contact member (8) is adapted to come in contact with at least 30 % or more of the peripheral length of the existing pipes (1, 2).

4. The fitting according to claim 3,
**characterized in that** the contact portion (8a) of the contact member (8) is adapted to come in contact with 80 % or more of the peripheral length of the existing pipes (1, 2).

5. The fitting according to any of claims 1 to 4,
**characterized in that** a head end of the engagement portion (3a) is formed with a length that is adapted to reach the vicinity of the head end of one (2) of the existing pipes (1, 2) in terms of the axial length of the existing pipes (1, 2) when the reinforcement fitting (3) is attached to the connections (10) between the existing pipes (1, 2).

6. The fitting according to any of claims 1 to 5,
**characterized in that** a plurality of contact portions (8a) which extend along an arc along the peripheral surface of the existing pipes (1, 2) are arranged and adapted to come nearly in equal contact with the peripheral surface of the existing pipes (1, 2).

## Patentansprüche

1. Verstärkungshalterung (3), die dazu ausgelegt ist, ein Schrumpfungs- und Ausdehnungsvermögen zu bieten, während die Abdichtfähigkeit an den Verbindungen (10) zwischen vorhandenen Rohrleitungen (1, 2) aufrechterhalten wird, indem die Verstärkungshalterung (3) an den Verbindungen (10) zwischen den vorhandenen Rohrleitungen (1, 2) montiert wird, wobei die Halterung folgendes aufweist:
- einen äußeren Halterungsbereich (3) mit einem Innendurchmesser, der außen um die vorhandenen Rohrleitungen (1, 2) montiert werden kann,
- ein Kontaktelement (8), das innen in einen Aussparungsbereich (9) montiert wird, der an der Innenseite des äußeren Halterungsbereiches gebildet ist und der sowohl eine sich verjüngende Kontaktfläche (8b) als auch einen Kontaktbereich (8a) aufweist, der dazu ausgelegt ist, in Umfangsrichtung in Kontakt mit der einen Rohrleitung (2) der vorhandenen Rohrleitungen (1, 2) zu kommen und der den Kontaktwiderstand mit der einen Rohrleitung (2) der vorhandenen Rohrleitungen (1, 2) erhöht, wenn eine äußere Kraft in eine Richtung ausgeübt wird, die die Tendenz hat, die vorhandenen Rohrleitungen (1, 2) zu trennen, und
- einen Eingriffsbereich (3a), der in der Lage ist, mit der anderen vorhandenen Rohrleitung (1) in Eingriff zu kommen, wenn die äußere Kraft in eine Richtung ausgeübt wird, die die Tendenz hat, die vorhandenen Rohrleitungen (1, 2) zu trennen,
**dadurch gekennzeichnet,**
**daß** ein Ausbuchtungsbereich (13) in der Umfangsseite der Verstärkungshalterung (3) gebildet ist und dazu ausgelegt ist, einen räumlichen Kontakt des vorstehenden Bereiches der Verstärkungshalterung (3) mit den Anschlußelementen (4a, 5, 6) an den Verbindungen (10) zwischen den vorhandenen Rohrleitungen (1, 2) zu vermeiden.

2. Halterung nach Anspruch 1,
**dadurch gekennzeichnet,**
**daß** der Kontaktbereich (8a) des Kontaktelements (8) eine gebogene Struktur entlang der Umfangsfläche der vorhandenen Rohrleitungen (1, 2) sowie einen nahezu V-förmigen Querschnitt hat und daß eine Vielzahl von Kontaktelementen (8) an dem Aussparungsbereich (9) angeordnet sind.

3. Halterung nach Anspruch 1 oder 2,
**dadurch gekennzeichnet,**
**daß** der Kontaktbereich (8a) des Kontaktelements (8) dazu ausgelegt ist, mit mindestens 30% oder mehr der Umfangslänge der vorhandenen Rohrleitungen (1, 2) in Kontakt zu kommen.

4. Halterung nach Anspruch 3,
**dadurch gekennzeichnet,**
**daß** der Kontaktbereich (8a) des Kontaktelements (8) dazu ausgelegt ist, mit 80% oder mehr der Umfangslänge der vorhandenen Rohrleitungen (1, 2) in Kontakt zu kommen.

5. Halterung nach einem der Ansprüche 1 bis 4,
**dadurch gekennzeichnet,**
**daß** das Kopfende des Eingriffsbereichs (3a) mit einer Länge ausgebildet ist, die dazu ausgelegt ist, die Nähe des Kopfendes von der einen Rohrleitung (2) der vorhandenen Rohrleitungen (1, 2) im Sinne der Axiallänge der vorhandenen Rohrleitungen (1, 2) zu erreichen, wenn die Verstärkungshalterung (3) an den Verbindungen (10) zwischen den vorhandenen Rohrleitungen (1, 2) angebracht ist.

6. Halterung nach einem der Ansprüche 1 bis 5,
**dadurch gekennzeichnet,**
**daß** eine Vielzahl von Kontaktbereichen (8a), die sich entlang eines Bogens um die Umfangsfläche der vorhandenen Rohrleitungen (1, 2) erstrecken, derart angeordnet und dazu ausgelegt sind, nahezu in gleichen Kontakt mit der Umfangsfläche der vorhandenen Rohrleitungen (1, 2) zu kommen.

## Revendications

1. Accessoire de renforcement (3) qui est adapté pour fournir des capacités de rétrécissement et de dilatation, une capacité d'étanchéité étant maintenue aux connexions (10) entre des tuyaux existants (1, 2) en installant l'accessoire de renforcement (3) sur les connexions (10) entre les tuyaux existants (1, 2),
l'accessoire comportant
- une partie (3) s'agençant extérieurement ayant un diamètre intérieur qui peut être agencé extérieurement sur les tuyaux existants (1, 2),
- un élément de contact (8) qui est agencé intérieurement dans une partie évidée (9) formée à l'intérieur de la partie s'agençant extérieurement, et qui comporte une surface de contact conique (8b) et une partie de contact (8a) adaptée pour venir en contact avec un premier tuyau (2) parmi les tuyaux existants (1, 2) dans la direction circonférentielle, et augmente la résistance de contact avec le premier (2) des tuyaux existants (1, 2) lorsqu'une force extérieure est exercée dans une direction tendant à séparer les tuyaux existants (1, 2), et
- une partie de mise en prise (3a) qui est capable de venir en prise avec l'autre tuyau existant (1) lorsque la force extérieure est exercée dans une direction tendant à séparer les tuyaux existants (1, 2),
**caractérisé en ce qu'**une partie découpée (13) est formée dans le côté périphérique de l'accessoire de renforcement (3) et est adaptée pour éviter spatialement un contact de la partie faisant saillie de l'accessoire de renforcement (3) avec les éléments de connexion (4a, 5, 6) aux connexions (10) entre les tuyaux existants (1, 2).

2. Accessoire selon la revendication 1,
**caractérisé en ce que** la partie de contact (8a) de l'élément de contact (8) a une structure en arc le long de la surface périphérique des tuyaux existants (1, 2), et a également une coupe transversale pratiquement en forme de V,
et **en ce qu'**une pluralité d'éléments de contact (8) sont agencés à la partie évidée (9).

3. Accessoire selon la revendication 1 ou 2,
**caractérisé en ce que** la partie de contact (8a) de l'élément de contact (8) est adaptée pour venir en contact avec au moins 30 % ou plus de la longueur périphérique des tuyaux existants (1, 2).

4. Accessoire selon la revendication 3,
**caractérisé en ce que** la partie de contact (8a) de l'élément de contact (8) est adaptée pour venir en contact avec 80 % ou plus de la longueur périphérique des tuyaux existants (1, 2).

5. Accessoire selon l'une des revendications 1 à 4,
**caractérisé en ce qu'**une extrémité de tête de la partie de mise en prise (3a) est formée en ayant une longueur qui est adaptée pour atteindre la proximité de l'extrémité de tête d'un premier tuyau (2) parmi les tuyaux existants (1, 2) en termes de longueur axiale des tuyaux existants (1, 2) lorsque l'accessoire de renforcement (3) est fixé sur les connexions (10) situées entre les tuyaux existants (1, 2).

6. Accessoire selon l'une des revendications 1 à 5,
**caractérisé en ce qu'**une pluralité de parties de contact (8a) qui s'étendent le long d'un arc le long de la surface périphérique des tuyaux existants (1, 2) sont agencées et adaptées pour venir pratiquement en contact égal avec la surface périphérique des tuyaux existants (1, 2).
